# EUROPEAN PATENT SPECIFICATION

(11) **EP 3 029 891 B1**
(45) Date of publication and mention of the grant of the patent: **26.05.2021**
(21) Application number: 14196385.0
(22) Date of filing: 04.12.2014
(51) Int. Cl.: H04L 12/66, H04W 76/12, H04W 88/16, H04W 92/24

(54) **ESTABLISHMENT OF BEARERS FOR CDN TRAFFIC**
FUNKTRÄGEREINRICHTUNG FÜR CDN-FUNKVERKEHR
ETABLISSEMENT DE PORTEUSES RADIO POUR TRAFFIC CDN

(43) Date of publication of application: 08.06.2016
(73) Proprietor: Alcatel Lucent, 91620 Nozay (FR)
(72) Inventor: El Mghazli, Yacine, 91620 Nozay (FR); Mongazon-Cazavet, Bruno, 91620 Nozay (FR)
(74) Representative: Cabinet Camus Lebkiri

(56) References cited:
- LONGJIAO MA ET AL: "Traffic Offload Mechanism in EPC Based on Bearer Type", WIRELESS COMMUNICATIONS, NETWORKING AND MOBILE COMPUTING (WICOM), 2011 7TH INTERNATIONAL CONFERENCE ON, IEEE, 23 September 2011 (2011-09-23), pages 1-4, XP032059771, DOI: 10.1109/WICOM.2011.6040403 ISBN: 978-1-4244-6250-6

## Description

### FIELD OF THE INVENTION

The present invention relates to the technical field of Content Delivery Network (CDN), and particularly to a method and an assembly to route transparently the CDN traffic in a mobile network.

### BACKGROUND OF THE INVENTION

By "user equipment", it is meant, here, any device comprising means permitting to connect to a mobile network such as a cellular network.

A Content Delivery Network, also referred to as Content Distribution Network (CDN), is a system making available copies of data/content, through interconnected storage means such as caches.

Data/content stored in a CDN network, may be for instance web objects, downloadable objects (ex: media files, software, documents), applications or real-time media streams. The data traffic associated with this kind of content is further referred to hereinafter as "CDN traffic".

In CDN, copies of data/content are placed at various points of the network so as to maximize bandwidth/throughputs for access to the data/content from clients throughout the network.

Unlike clients of a network accessing a same central server, CDN permits to avoid bottlenecks near a central server. Indeed, in CDN a client accesses a copy of a data/content located nearby.

For CDN, the term "near" refers to a topological distance in IP network. A topological distance may be evaluated, based on criterions such as hop counts, network latency, response to a ping (i.e. round-trip delay time) or network load.

In fact, the CDN role is to take into account the notion of IP distance and to select an appropriate delivery node (also known as Delivery Appliance - DA) where to route a user request. By "Delivery Appliance", it is meant here, a point/node in CDN, comprising means to store CDN data/content copies and means for delivering them.

CDN model is very efficient for fixed network, provided for instance by Internet Service Providers (ISP), because user IP addresses are allocated in a geographical manner. With means that are based on the IP address of a user, it is possible to identify a nearest DA (in term of network topological distance) from the user location.

However, for Mobile Network Operators (MNO), the problem in cellular networks is different since IP addresses are allocated from a pool of IP addresses, without any user location considerations. In fact, it is impossible to establish a link between user IP address and user location for identifying a nearest DA, i.e. to forward user CDN content request to the closest delivery node.

Mobile networks, such as LTE packet core (EPC for Evolved Packet Core), are generally designed in a centralized way, so that all traffic is tunneled through a single Packet Data Network Gateway (PGW) interfaced with a Packet Data Networks (PDN) through SGi link.

The PDN may be provided for instance by a CDN, comprising DAs (also known as delivery nodes) and service nodes (also known as control nodes), that are configured for managing, routing and monitoring components of the CDN.

In fact, LTE packet core is a centralized architecture. The LTE architecture does not allow CDN service to determine a near DA based only on UE IP address, since UE IP address has no topological meaning (i.e. are not interpretable in terms of location) within LTE networks. Moreover, LTE architecture does not allow placing DAs lower in LTE networks than on SGi interfaces, i.e. next to PGWs because of its centralized architecture.

This appears to be a major issue, since mobile networks face the same traffic problems as fixed/wired accesses networks, and it would be definitely useful to place DAs lower in LTE networks, in order to offload the EPC.

Consequently, it matters to allow CDN operators to place DAs at lower levels in their networks, in order to avoid central server bottlenecks issues, and make DAs reachable by the users.

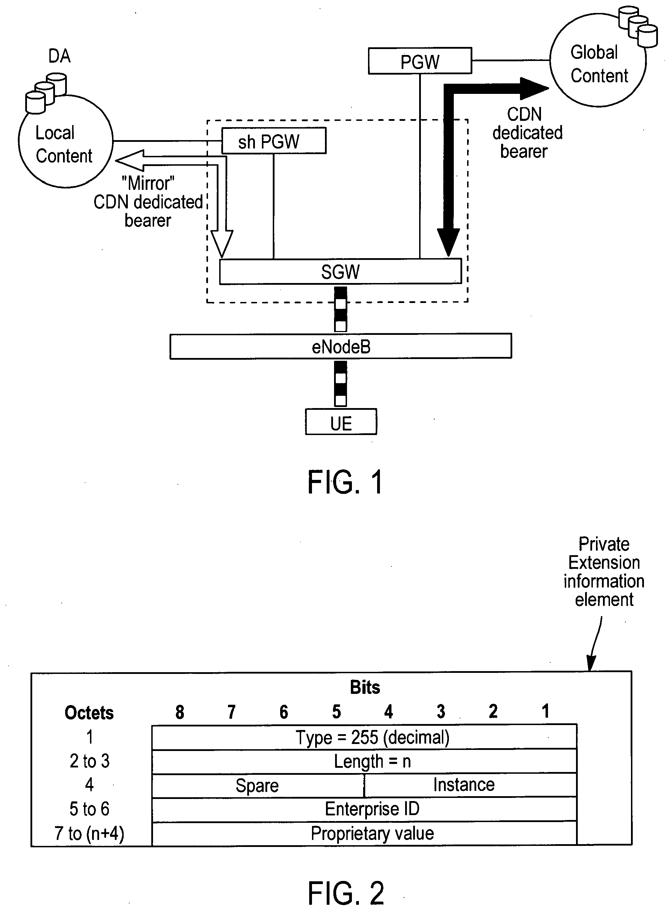

A solution is described in the European patent application EP13306183.8, filed on August 29th 2013. This solution, illustrated on figure 1, relies on using a system comprising:
- a base station eNodeB providing a connection to an UE ;
- a central Packet Data Network Gateway PGW ;
- a Serving Gateway SGW interfaced between the base station eNodeB and the central PGW ;
- a shadow PGW, referenced as Sh PGW, interfaced between the SGW and the closest CDN DA to the base station eNodeB. The shadow PGW may be indifferently a separated module from the SGW or collocated near the SGW.

According to the solution, the SGW is configured for, upon reception of a bearer establishment request issued from the central PGW, known as "Create Bearer Request":
- determining whether the requested bearer is associated with the CDN, that is to say whether the requested bearer is a dedicated bearer for the CDN traffic ;
- in the event that the requested bearer is a CDN dedicated bearer:
   o establishing a CDN dedicated bearer with the central PGW ;
   o establishing a "mirror" CDN dedicated bearer with the shadow PGW with using information from the CDN dedicated bearer established with the central PGW. Said information comprise tunnel endpoint identifiers TEID, traffic flow template TFT, quality of service QoS class of identifier and guaranteed bit rate GBR used by the CDN dedicated bearer established with the central PGW.

Afterwards, the SGW routes:
- uplink data received from the base station eNodeB:
   ▪ with using the "mirror" CDN dedicated bearer established with the shadow PGW, when the uplink data is identified as referring to CDN data ; then the shadow PGW forwards the CDN traffic to the DA ;
   ▪ with using a default bearer established with the central PGW otherwise ;
- downlink data received in response to uplink data, from the central or shadow PGW to the base station eNobeB.

Thus, the shadow PGW is configured for automatically and transparently routing (from central PGW point of view) a given CDN traffic to/from a nearest local DA, which avoids loading the EPC.

So as to determine whether the requested bearer is a request for a CDN dedicated bearer, the SGW compares the destination address comprised in the Traffic Flow Template (TFT) of the Bearer Context Information Element (IE) of the Create Bearer Request against the DA IP address.

This method implies that the SGW must analyze the destination addresses in the TFTs of every Create Bearer Request issued from the PGW, which requires important processing times ;

The document "Traffic Offload Mechanism in EPC based on Bearer Type", Longjiao Ma et al, Wireless communications, networking and mobile computing (WICOM), IEEE, 23 September 2011, DOI: 10.1109/WICOM.2011.6040403 is known from the state of the art.

### SUMMARY OF THE INVENTION

One object of the present invention is to provide a solution to the aforementioned drawbacks, with thr method of independent claim 1 and the assembly of independent claim 4.

According to a first aspect, the invention relates to a method for associating a bearer whose creation is requested by a Packet Data Network Gateway of a mobile network with a Content Distribution Network, comprising the following steps, performed by said Packet Data Network Gateway:
- setting a flag in a part of an information element of a creation request for said bearer,
- sending the bearer creation request to a Serving Gateway of the mobile network, interfaced with the Packet Data Network Gateway.

A bearer creation request is commonly called a create bearer request, as defined in section 7.2.3 of the 3GPP TS 29.274. This section also defines the information elements comprised in a create bearer request.

According to another implementation, the flag is set in a Private Extension information element of the bearer creation request. Private Extension information elements are defined in section 8.67 of the 3GPP TS 29.274.

According to another implementation, the flag is set in a Proprietary Value of the Private Extension information element of the bearer creation request.

According to a second aspect, the invention relates to a packet data network gateway of a mobile data network, configured for carrying out a method according to the first aspect of the invention.

According to a third aspect, the invention relates to a method for determining whether a bearer whose creation is requested by a Packet Data Network Gateway of a mobile network, is associated with a Content Distribution Network, comprising the following steps, performed by a Serving Gateway interfaced with the Packet Data Network Gateway:
- receiving a creation request for said bearer,
- performing a test, which is positive in the event that a flag is set in a part of an information element of the bearer creation request,
- In the event of a positive test, determining that the bearer is associated with the Content Distribution Network.

According to another implementation, the information element is a Private Extension information element of the bearer creation request.

According to another implementation, the part of the information element is a Proprietary Value of the Private Extension information element.

According to a fourth aspect, the invention relates to a Serving Gateway of a mobile data network, configured for carrying out a method according to the third aspect.

### DETAILLED DESCRIPTION

As previously explained, the Serving Gateway SGW is configured for, upon reception of a bearer creation request Rq issued from the central PGW, called "Create Bearer Request" and defined in section 7.2.3 of the 3GPP TS 29.274:
- determining whether the requested bearer is associated with a CDN, that is to say whether the requested bearer is a dedicated bearer for the CDN traffic ;
- in the event that the requested bearer is a CDN dedicated bearer:
   o establishing a CDN dedicated bearer with the central PGW ;
   o establishing a "mirror" CDN dedicated bearer with the shadow PGW with using information from the CDN dedicated bearer established with the central PGW. Said information comprise tunnel endpoint identifiers TEID, traffic flow template TFT, quality of service QoS class of identifier and guaranteed bit rate GBR used by the CDN dedicated bearer established with the central PGW.

According to the invention, in order to enable the SGW to determine that a requested bearer is associated with a CDN, the central Packet Data Network Gateway PGW first sets a flag in a part of an information element of the bearer creation request Rq. Thus, the central PGW explicitly associates the requested bearer to the CDN, whose traffic must be redirected toward the shadow PGW.

More precisely, the central PGW sets a flag in a Proprietary Value of a Private Extension information element of the bearer creation request Rq.

As defined in the 3GPP TS 29.274, the bearer creation request Rq comprises several information elements, listed hereafter:
- Procedure Transaction Id (PTI)
- Linked Bearer Identity (LBI)
- Protocol Configuration Options (PCO)
- Bearer Context, comprising among others a Traffic Flow Template (TFT)
- PGW-FQ-CSID
- SGW-FQ-CSID
- Change Reporting Action
- CSG Information Reporting Action
- Private Extension.

The Private Extension information element is an element of a variable length, having the structure illustrated in figure 2. The last part of the Private Extension information element, starting from the seventh octet, is reserved to encode a Proprietary value. The flag set by the central PGW is for example the value 1 coded in the Proprietary Value.

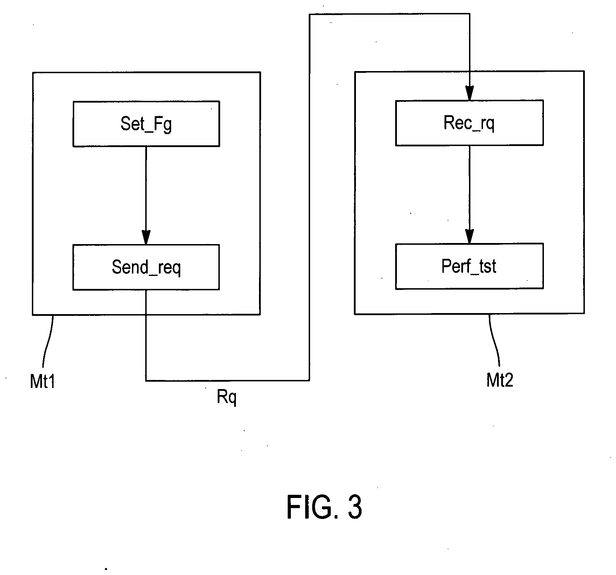

Thus, with reference to figure 3, the central PGW performs a method Mt1 for associating the requested bearer to the CDN comprising:
- At a step Set_fg, setting the flag in the Proprietary Value of the Private Extension of the bearer creation request Rq
- At a step Send_req, sending the bearer creation request Rq comprising the flag to the SGW.

Then, the SGW, upon reception of the bearer creation request Rq, examines whether the Proprietary Value of the Private Extension of the bearer creation request Rq comprises a flag. The presence of a flag enables the SGW to determine that the requested bearer is associated with a CDN.

Thus, the SGW performs a method Mt2 for determining whether the requested bearer is associated with a CDN, comprising:
- At a step Rec_rq, receiving the bearer creation request Rq,
- At a step Perf_tst performing a test, which is positive if the Proprietary Value of the Private Extension of the bearer creation request Rq comprises the flag, negative otherwise.

In the event of a positive test, the SGW determines that the bearer is associated with the CDN. On the contrary, in the event of a negative test, the SGW determines that the bearer is not associated with the CDN.

The described methods enable the SGW to easily detect the creation of a CDN dedicated bearer, so as to trigger the establishment of a mirror dedicated bearer with the shadow PGW, without having to perform a deep inspection of the TFT of the request Rq.

## Claims

1. Method for associating a bearer whose creation is requested by a Packet Data Network Gateway of a mobile network with a Content Distribution Network comprising a plurality of Delivery Appliances and then for determining whether the bearer whose creation is requested by a Packet Data Network Gateway of a mobile network is associated with the Content Distribution Network, comprising the following steps:
- setting a flag, by said Packet Data Network Gateway, in a part of an information element of a creation request for said bearer,
- sending, by said Packet Data Network Gateway, the bearer creation request to a Serving Gateway of the mobile network, interfaced with the Packet Data Network Gateway and with a base station eNodeB;
- receiving, at the Serving Gateway, the bearer creation request,
- performing a test, by the Serving Gateway, the test being positive in the event that the flag is set in the part of the information element of the creation request for said bearer,
- in the event of a positive test, determining, by the Serving Gateway, that the bearer is associated with the Content Distribution Network, establishing, by the Serving Gateway, a Content Distribution Network dedicated bearer with the Packet Data Network Gateway and establishing, by the Serving Gateway, a mirror Content Distribution Network dedicated bearer with a shadow Packet Data Network Gateway with using information from the Content Distribution Network dedicated bearer established with the Packet Data Network Gateway, the shadow Packet Data Network Gateway being interfaced between the Serving Gateway and the Delivery Appliance closest to the base station eNodeB of the plurality of Delivery Appliances of the Content Distribution Network closest to the base station eNodeB.

2. Method according to claim 1, wherein the information element is a Private Extension of the bearer creation request.

3. Method according to claim 2, wherein the part of the information element is a Proprietary Value of the Private Extension information element.

4. Assembly comprising a Serving Gateway and a Packet Data Network Gateway interfaced in a mobile network with a Content Distribution Network comprising a plurality of Delivery Appliances, **characterized in that**:
- the Packet Data Network Gateway is configured to:
- set a flag in a part of an information element of a creation request for said bearer;
- send the bearer creation request to the Serving Gateway;
- the Serving Gateway is also interfaced with and with a base station eNodeB and is configured to:
- receive the bearer creation request from the Packet Data Network Gateway;
- perform a test, which is positive in the event that the flag is set in the part of the information element of the creation request for said bearer,
- in the event of a positive test, determine that the bearer is associated with the Content Distribution Network, establish a Content Distribution Network dedicated bearer with the Packet Data Network Gateway and establish a mirror Content Distribution Network dedicated bearer with a shadow Packet Data Network Gateway with using information from the Content Distribution Network dedicated bearer established with the Packet Data Network Gateway, the shadow Packet Data Network Gateway being interfaced between the Serving Gateway and the Delivery Appliance closest to the base station eNodeB of the plurality of Delivery Appliances of the Content Distribution Network.

5. Assembly according to claim 4, wherein the information element is a Private Extension information element of the bearer creation request.

6. Assembly according to claim 5, wherein the part of the information element is a Proprietary Value of the Private Extension information element.

## Patentansprüche

1. Verfahren zum Zuordnen eines Inhabers, dessen Anlegen von einem Packet Data Network Gateway eines mobilen Netzwerks mit einem Content Distribution Network, umfassend eine Vielzahl von Ausgabegeräten angefordert wird und dann zum Bestimmen, ob der Inhaber, dessen Anlegen von einem Packet Data Network Gateway eines mobilen Netzwerks angefordert wird, dem Content Distribution Network zugeordnet wird, umfassend die folgenden Schritte:
- Einrichten eines Flags durch das genannte Packet Data Network Gateway in einem Teil eines Informationselements einer Anlegeanfrage für den genannten Inhaber;
- Senden der Inhaber-Anlegeanfrage durch das genannte Packet Data Network Gateway an ein Serving Gateway des mobilen Netzwerks, das mit dem Packet Data Network Gateway, und mit einer Basisstation eNodeB eine Schnittstelle bildet;
- Empfangen der Inhaber-Anlegeanfrage am Serving Gateway;
- Durchführen eines Tests durch das Serving Gateway, wobei der Test in dem Fall positiv ist, wenn das Flag in dem Teil des Informationselements der Anlegeanfrage für den genannten Inhaber eingestellt ist;
- für den Fall eines positiven Tests Bestimmen durch das Serving Gateway, dass der Inhaber dem Content Distribution Network zugeordnet ist, Aufbauen eines dem Content Distribution Network dedizierten Inhabers durch das Serving Gateway mit dem Packet Data Network Gateway und Aufbauen eines dem Spiegel-Content Distribution Network dedizierten Inhabers durch das Serving Gateway mit einem Schatten-Packet Data Network Gateway unter Verwenden von Informationen von dem dem Content Distribution Network dedizierten Inhaber, der mit dem Packet Data Network Gateway aufgebaut wird, wobei das Schatten-Packet Data Network Gateway zwischen dem Serving Gateway und dem Ausgabegerät eine Schnittstelle bildet, die der Basisstation eNodeB der Vielzahl von Ausgabegeräten des Content Distribution Networks am nächsten sind, das der Basisstation eNodeB am nächsten ist.

2. Verfahren gemäß Anspruch 1, wobei das Informationselement eine private Erweiterung der Inhaber-Anlegeanfrage ist.

3. Verfahren gemäß Anspruch 2, wobei das Teil des Informationselements ein geschützter Wert des privaten Erweiterung-Informationselements ist.

4. Anordnung, umfassend ein Service Gateway und ein Packet Data Network Gateway, das eine Schnittstelle in einem mobilen Netzwerk mit einem Content Distribution Network bildet, umfassend eine Vielzahl von Ausgabegeräten, **dadurch gekennzeichnet, dass**:
- das Packet Data Network Gateway ausgestaltet ist zum:
- Einrichten eines Flags in einem Teil eines Informationselements einer Anlegeanfrage für den genannten Inhaber;
- Senden der Inhaber-Anlegeanfrage an das Serving Gateway;
- das Serving Gateway ebenfalls mit einer Basisstation eNodeB eine Schnittstelle bildet und ausgestaltet ist zum:
- Empfangen der Inhaber-Anlegeanfrage von dem Packet Data Network Gateway;
- Durchführen eines Testes, der in dem Fall positiv ist, wenn das Flag in dem Teil des Informationselements der Anlegeanfrage für den genannten Inhaber eingerichtet ist,
- Im Fall eines positiven Tests Bestimmen, dass der Inhaber dem Content Distribution Network zugeordnet ist, Aufbauen eines dem Content Distribution Networks dedizierten Inhabers mit dem Packet Data Network Gateway und Aufbauen eines dem Spiegel-Content Distribution Network dedizierten Inhabers mit einem Schatten-Packet Data Network Gateway unter Verwenden von Informationen von dem dem Content Distribution Network dedizierten Inhaber, das mit dem Packet Data Network Gateway aufgebaut wird, wobei das Schatten-Packet Data Network Gateway zwischen dem Serving Gateway und dem Ausgabegerät eine Schnittstelle bildet, die dieser Basisstation eNodeB der Vielzahl von Ausgabegeräten des Content Distribution Networks am nächsten sind.

5. Anordnung gemäß Anspruch 4, wobei das Informationselement ein Privat Extension-Informationselement der Inhaber-Anlegeanfrage ist.

6. Anordnung gemäß Anspruch 5, wobei das Teil des Informationselements ein geschützter Wert des privaten Erweiterungs-Informationselements ist.

## Revendications

1. Procédé pour associer un tunnel bearer dont la création est demandée par une passerelle de réseau à commutation de paquets d'un réseau mobile à un réseau de distribution de contenu comprenant une pluralité de nœuds Delivery Appliances, puis pour déterminer si le tunnel bearer dont la création est demandée par une passerelle de réseau à commutation de paquets d'un réseau mobile est associé au réseau de distribution de contenu, comprenant les étapes suivantes :
- le positionnement d'un drapeau, par ladite passerelle de réseau à commutation de paquets, dans une partie d'un élément d'informations d'une requête de création dudit tunnel bearer,
- l'envoi, par ladite passerelle de réseau à commutation de paquets, de la requête de création de tunnel bearer à une passerelle de service du réseau mobile, interfacée avec la passerelle de réseau à commutation de paquets et avec une station de base eNodeB;
- la réception, au niveau de la passerelle de service, de la requête de création de tunnel bearer,
- la réalisation d'un test, par la passerelle de service, le test étant positif dans le cas où le drapeau est positionné dans la partie de l'élément d'informations de la requête de création dudit tunnel bearer,
- dans le cas d'un test positif, la détermination, par la passerelle de service, du fait que le tunnel bearer est associé au réseau de distribution de contenu, l'établissement, par la passerelle de service, d'un tunnel bearer dédié au réseau de distribution de contenu avec la passerelle de réseau à commutation de paquets et l'établissement, par la passerelle de service, d'un tunnel bearer dédié au réseau de distribution de contenu miroir avec une passerelle fantôme de réseau à commutation de paquets à l'aide d'informations provenant du tunnel bearer dédié au réseau de distribution de contenu établi avec la passerelle de réseau à commutation de paquets, la passerelle fantôme de réseau à commutation de paquets étant interfacée entre la passerelle de service et le nœud Delivery Appliance le plus proche de la station de base eNodeB de la pluralité de nœuds Delivery Appliances du réseau de distribution de contenu les plus proches de la station de base eNodeB.

2. Procédé selon la revendication 1, dans lequel l'élément d'informations est une extension privée de la requête de création de tunnel bearer.

3. Procédé selon la revendication 2, dans lequel la partie de l'élément d'informations est une valeur propriétaire de l'élément d'informations d'extension privée.

4. Ensemble comprenant une passerelle de service et une passerelle de réseau à commutation de paquets interfacée dans un réseau mobile avec un réseau de distribution de contenu comprenant une pluralité de neouds Delivery Appliances, **caractérisé en ce que** :
- la passerelle de réseau à commutation de paquets est configurée pour :
- positionner un drapeau dans une partie d'un élément d'informations d'une requête de création dudit tunnel bearer;
- envoyer la requête de création de tunnel bearer à la passerelle de service ;
- la passerelle de service est également interfacée avec une station de base eNodeB et est configurée pour :
- recevoir la requête de création de tunnel bearer depuis la passerelle de réseau à commutation de paquets ;
- réaliser un essai, qui est positif dans le cas où le drapeau est positionné dans la partie de l'élément d'informations de la requête de création dudit tunnel bearer,
- dans le cas d'un essai positif, déterminer que le tunnel bearer est associé au réseau de distribution de contenu, établir un tunnel bearer dédié au réseau de distribution de contenu avec la passerelle de réseau à commutation de paquets et établir un tunnel bearer dédié au réseau de distribution de contenu miroir avec une passerelle fantôme de réseau à commutation de paquets à l'aide d'informations provenant du tunnel bearer dédié au réseau de distribution de contenu établi avec la passerelle de réseau à commutation de paquets, la passerelle fantôme de réseau à commutation de paquets étant interfacée entre la passerelle de service et l'appareil de fourniture le plus proche de la station de base eNodeB de la pluralité de nœuds Delivery Appliances du réseau de distribution de contenu.

5. Ensemble selon la revendication 4, dans lequel l'élément d'informations est un élément d'informations d'extension privée de la requête de création de tunnel bearer.

6. Ensemble selon la revendication 5, dans lequel la partie de l'élément d'informations est une valeur propriétaire de l'élément d'informations d'extension privée.
